# EUROPEAN PATENT APPLICATION

(11) **EP 2 114 101 A1**
(43) Date of publication of application: **04.11.2009**
(21) Application number: 08008358.7
(22) Date of filing: 02.05.2008
(51) Int. Cl.: H04W 36/10

(54) **A method and a controller for providing a continuous real time service**

(71) Applicant: Nokia Siemens Networks Oy, 02610 Espoo (FI)
(72) Inventor: Vainola, Kati, 12240 Hikiä (FI)
(74) Representative: Krombach, Rainer

(57) **Abstract**

A method and a controller for providing a continuous real time service

A method and an apparatus for providing a continuous real time service for a user equipment (1) which moves from a serving radio network subsystem (2) to a target radio network subsystem (9), wherein during the SRNS-relocation a source radio network controller (3) of said serving radio network subsystem (2) performs bi-casting of data packets via a target radio network controller(7) of said target radio network subsystem (9) to said user equipment (1).

## Description

The invention relates to a method and a controller for providing a continous real time service during a handover in mobile communication network.

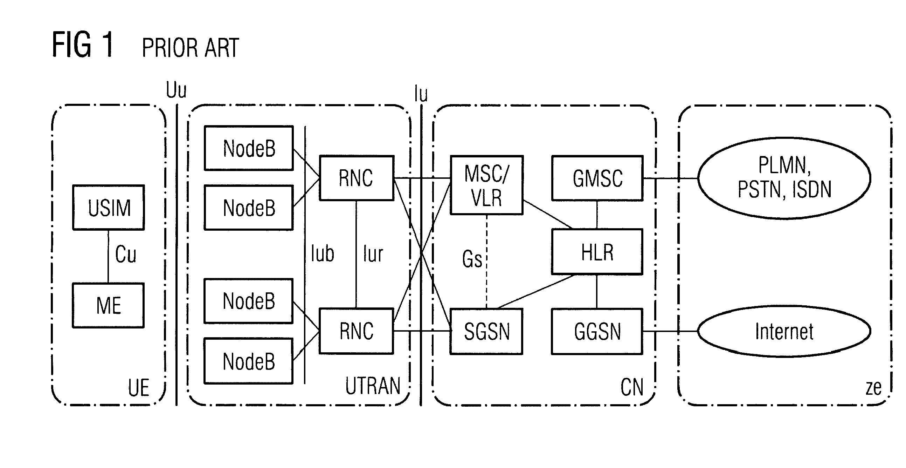

Fig. 1 shows the architecture of a conventional UMTS network. The UMTS network comprises a UMTS radio access network (UTRAN) having several radio network systems RNS each including a radio network controller RNC to which base stations are connected via Iub interfaces. The base stations are also referred to as node Bs. The RNC is connected to a circuit switched core network through a media gateway or directly to MSC Server (MSS) and to the SGSN (Serving GPRS support node)in the packet switched core network. A Iur interface connects two RNCs with each other. Each RNC provides control functionalities for one or more nodes B.

When a user equipment UE or a mobile device moves from one cell to another cell that belongs to a different radio network controller RNC, i. e. a radio network controller which is different from the radio network controller on which a call was initiated a relocation procedure is initiated to avoid unnecessary signalling between the two radio network controllers RNC. The relocation procedure is negotiated between the two radio network subsystems RNS of the different radio network controllers RNC. Once a relocation procedure is completed the connection of the user equipment UE to the old domain is released.

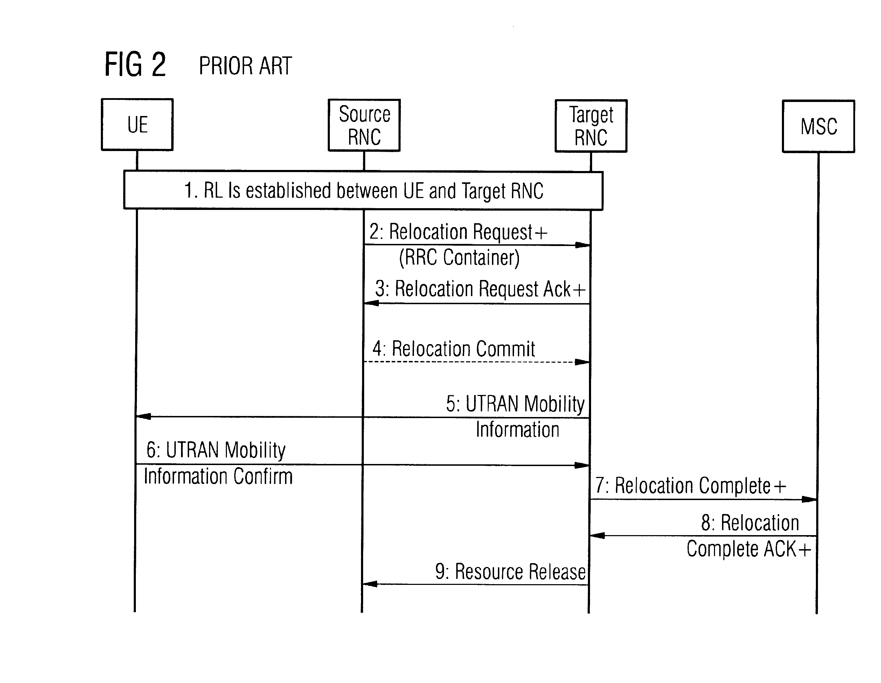

Fig. 2 shows a signalling diagram of a SRNS relocation procedure as defined in the 3GPP RAN3 TR R3.021 "enhancements for SRNS relocation". As can be seen in the conventional relocation procedure as shown in Fig. 2 at first a radio link RL is established between the user equipment UE and a drift radio network controller DRNC as the target RNC.

When the serving radio network controller SRNC as the source radio network controller decides to relocate the mobile device, i. e. the user equipment 1 to the target RNC it sends a message to the target RNC. The signalling protocol responsible for the communication between radio network controllers RNC is the radio network subsystem application part (RNSAP) protocol carried over the Iur interface. The source RNC sends a RNSAP relocation request message to the target RNC. The target RNC performs an admission control and configures necessary resources on the target side. In case that an IP transport option is deployed over Iu-CS UP the source radio network controller SRNC contains the transport layer information in the message.

If the target radio network controller decides to accept the request of the source RNC the target RNC replies with a RNSAP relocation request acknowledgement message which it transmitted to the source RNC.

Then the source RNC sends a RNSAP relocation commit message to the target RNC.

After reception of the relocation commit message from the source RNC the target RNC sends to the user equipment UE for example a RRC-UTRAN Mobility Information message including information about a S-RNTI for the user equipment UE.

As a further step of the SRNS relocation procedure the target RNC receives a UTRAN Mobility Information confirmation message from the user equipment UE.

Then the target RNC sends a RANAP relocation complete message to the mobile switching center MSC indicating that a relocation has happened on the user equipment UE.

The mobile switching center MSC then configures the necessary Iu resources of the Iu interface for the target RNC and acknowledges with a RANAP relocation complete acknowledgement message transmitted to the target RNC. In case that a ATM transport option is deployed over Iu- CS UP the mobile switching center MSC contains the transport layer information data in this message.

After reception of the RANAP relocation complete acknowledgement message in the target RNC the RNC initiates to establish a AAL2 connection if an ATM transport option is used. Finally the target RNC initiates a release of the resources in the source RNC by sending a RNSAP resource release message to the source RNC as shown in Fig. 2 or the core network may send the release indication message to the source RNC as shown in fig 6. 2-5 of 3GPP R3.021. As can be seen in Fig. 2 the enhanced SRNS relocation procedure is performed in the radio access network and not in the core network. A SRNS relocation procedure is only identified to the core network after the relocation procedure has been completed.

With the improvement of mobility of a user equipment a SRNS relocation procedure as shown in Fig. 2 will occur more frequently. However, the conventional relocation procedure as shown Fig. 2 has the disadvantage that it does not support real time services such as speech services. Consequently a user equipment UE which moves from a serving radio network subsystem SRNS to a target radio network subsystem may face a service gap for his real time service. For example the speech quality of an ongoing telephone call might be reduced during a handover.

Accordingly it is an object of the present invention to provide a method and an apparatus for providing a continuous real time service also during a handover between radio network subsystems of a radio access network.

This object is achieved by a method comprising the features of claim 1.

The invention provides a method for providing a continuous real time service for a user equipment which moves from a serving radio network subsystem to a target radio network subsystem,
wherein during the SRNS relocation a source radio network controller of said serving radio network subsystem performs bi-casting of data packets via a target radio network controller of said target radio network subsystem to said user equipment.

In an embodiment of the method according to the present invention said source radio network controller starts bi-casting of said data packets in response to a relocation request acknowledgement message received from said target radio network controller.

In an embodiment of the method according to the present invention said source radio network controller stops bi-casting of said data packets in response to a relocation complete message received from said target radio network controller, i.e. the data transfer from the source RNC to the user equipment is stopped, but the data transfer from the source RNC via the target RNC to the user equipment is continued.

In an embodiment of the method according to the present invention said target radio network controller transmits said relocation complete message to said source radio network controller in response to a mobility information confirmation message from said user equipment.

In an embodiment of the method according to the present invention said source radio network controller stops bi-casting of said data packets in response to a resource release message to said source radio network controller in response to a relocation complete acknowledgement message received by said target radio network controller from a mobile switching center.

In an embodiment of the method according to the present invention said data packets are bi-casted simultaneously via parallel downlink data connections from said source radio network controller to said user equipment.

In an embodiment of the method according to the present invention a first downlink data connection signal path for bi-casting of data packets is formed by said source radio network controller, a base station of said serving radio network subsystem and said user equipment.

In an embodiment of the method according to the present invention a second downlink data connection signal path for bi-casting of data packets is formed by said source radio network controller, said target radio network controller, said base station of the target radio network subsystem and said user equipment.

In a possible embodiment of the method according to the present invention said source radio network controller is integrated in a base station of said serving radio network subsystem.

In a possible embodiment of the method according to the present invention said real time service is formed by a speech service.

In a possible embodiment of the method according to the present invention said source radio network controller and said target radio network controller communicate with each other via an interface using a radio network subsystem application part (RNSAP) signalling protocol.

The invention further provides a radio network controller for providing a continuous real time service,
wherein said radio network controller performs bi-casting of data packets via a target radio network controller of a target radio network subsystem to said user equipment, when said user equipment moves from a serving radio network subsystem of said radio network controller to said target radio network subsystem.

In a possible embodiment of the radio network controller according to the present invention said radio network controller is integrated in a base station of said serving radio network subsystem.
In a possible embodiment of the radio network controller according to the present invention said radio network controller is formed by the serving radio network controller.

The invention further provides a radio access network comprising a radio network controller which provides a continuous real time service,
wherein said radio network controller performs bi-casting of data packets via a target radio network controller of a target radio network subsystem to said user equipment, when said user equipment moves from a serving radio network subsystem of said radio network controller to a target radio network subsystem.

In a possible embodiment of the radio access network said radio network controller is connected to a circuit switched core network via a media gateway or is directly connected to a MSC Server (MSS).

In an embodiment of the radio access network said radio network controller is connected to a packet switched core network via a serving GPRS support node.

The invention further provides a computer program comprising commands for performing the method according to the present invention.

The invention further provides a data carrier for storing such a computer program.

In the following preferred embodiments of the method and controller according to the present invention are described with reference to the enclosed figures in more detail.
- Fig. 1: shows a network architecture of a conventional UMTS network;
- Fig. 2: shows a signal diagram for conventional relocation procedure;
- Fig. 3: shows a diagram for illustrating a handover between radio network subsystems wherein a continuous real time service is provided by the method according to the present invention;
- Fig. 4: shows a signal diagram of a possible embodiment of a SRNS-relocation procedure as employed in a possible embodiment of the method according to the present invention.

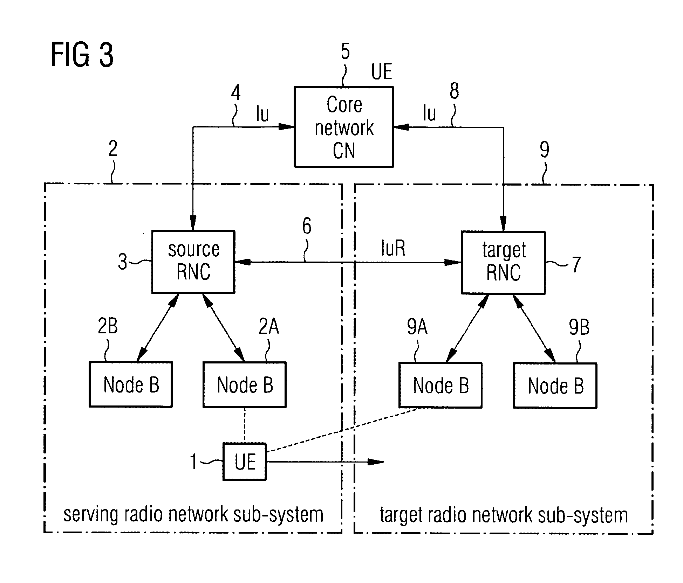

As can be seen in Fig. 3 a user equipment 1 exchanges data with a base station 2A of a serving radio network subsystem 2. The base station 2A, i. e. a node B of the serving radio network subsystem 2 is connected via an Iur interface to a source radio network controller 3 of the serving radio network subsystem 2. Further base stations such as base station 2B of the serving radio network subsystem 2 can also be connected via an Iur interface to the source radio network controller 3. The source radio network controller 3 is connected by means of an Iu interface 4 to a core network 5. Furthermore the source radio network controller 3 is connected via a IuR interface 6 to a target radio network controller 7 which has a Iu interface 8 with the core network 5. Several base stations such as base station 9A, 9B are connected via an IuB interface to the target radio network controller shown in Fig. 3. The radio network controllers 3, 7 of the radio network subsystems 2, 9 use a signalling protocol to communicate with the core network 5. In a possible embodiment this signalling protocol is the radio access network application part protocol RANAP. Furthermore, the source radio network controller 3 and the target radio network controller 7 communicate through the interface 6 by using a predetermined signalling protocol. In a possible embodiment the signalling protocol responsible for the communication between the source radio network controller 3 and the target radio network controller 7 is a radio network subsystem application part (RNSAP)-protocol carried over the IuR interface 6. The serving radio network subsystem 2 and the target radio network subsystem 9 as shown in Fig. 3 are subsystems of the radio access network of the mobile telecommunication system. The UMTS territorial radio access network (UTRAN) can comprise a plurality of radio network subsystems each having a at least one radio network controller RNC and several base stations or node B connected to that radio network controller RNC. The interfaces in the UTRAN can be implemented using ATM or IP except the Uu interface between the base station and the user equipment 1 which uses normally WCDMA technology. These interfaces can be carry information over SDH by means of optical fibers, over copper wires or microwave radio. Since the interfaces are logical interfaces several interfaces can be multiplexed onto the same transmission line.

The base stations 2A, 2B of the serving radio network subsystem 2 are provided for the user equipment 1 within a cell of the respective base station. When a user equipment 1 moves from a cell of a node 2A within the serving radio network subsystem 2 to another node such as node 9A of another radio network subsystem a handover procedure is necessary to ensure that the data connection of the mobile device, i. e. the user equipment 1, is maintained during that movement from one cell or radio network to another. In general the various embodiments of the user equipment 1 can include, but are not limited too, cellular telephones, personal digital assistants having wireless communication capabilities, portable computers having wireless communication capabilities, image capture devices such as digital cameras having wireless communication capabilities, gaming devices having wireless communication capabilities, music storage and playback appliances having wireless communication capabilities, internet appliances permitting wireless internet access and browsing, as well as portable units or terminals that incorporate combinations of such functions.

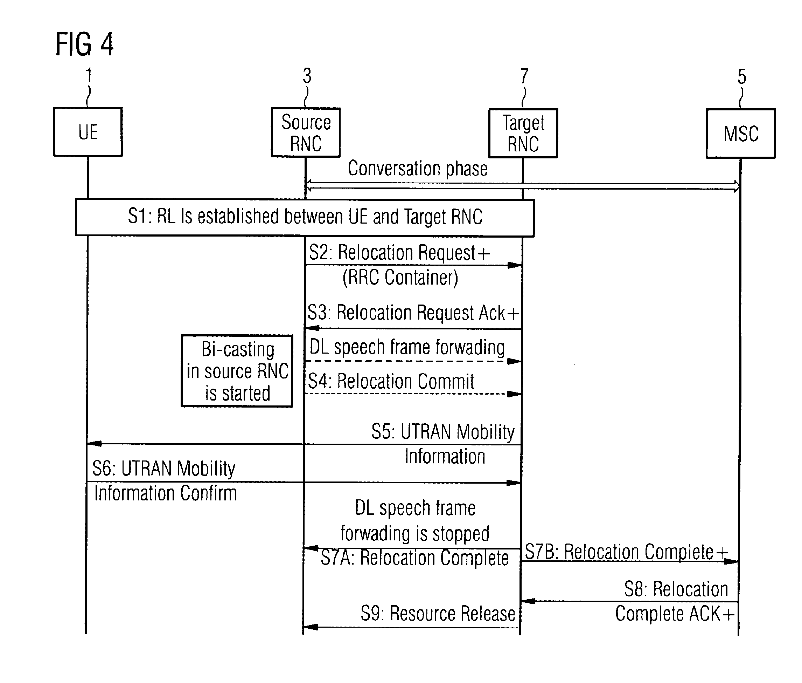

When the user equipment 1 moves from the serving radio network subsystem 2 to the target radio network subsystem 9 as shown in Fig. 3 an enhanced SRNS (serving radio network subsystem)-relocation is performed as shown in the signal diagram of Fig. 4 for that particular user equipment UE.

The enhanced SRNS relocation procedure as shown in Fig. 4 is performed within the radio access network shown in Fig. 3.

In the situation shown in Fig. 4 a real time service such as a telephone call has been established and a telephone conversation is going on.

In the SRNS relocation procedure first in step S1 a radio link RL is established between the user equipment 1 and the target radio network controller 7, i. e. a drift radio network controller DRNC, by means of a base station 9. There is a two-way speech data packet transfer between a source radio network controller 3 and the user equipment 1 via base station 2A of the serving radio network subsystem 2 as shown in Fig. 3.

When the source radio network controller 3 decides to relocate the user equipment 1 to the target radio network controller 7 the source radio network controller 3 sends in step S2 a RNSAP relocation request message to the target radio network controller 7 as shown in Fig. 4. The target radio network controller 7 performs an admission control and configures the necessary resources on the target side. In case that an IP transport option is deployed over IU-CS UP the source radio network controller 3 contains a transport layer information in the relocation request message.

When the target radio network controller 7 decides to accept the relocation request it replies with a RNSAP relocation request acknowledgement message in step S3. In the enhanced SRNS relocation procedure as employed by the method according to the present invention and as shown in Fig. 4 the reception of the relocation request acknowledgement message by the source radio network controller 3 indicates to the source radio network controller 3 to start a downlink bi-casting of data packets. The source radio network controller 3 performs bi-casting of data packets such as speech data packets via the target radio network controller 7 of the target radio network subsystem 9 to the user equipment 1. The data packets are bi-casted simultaneously via parallel downlink data connections from the source radio network controller 3 to the user equipment 1. There are at least two downlink data connection signal paths for bi-casting the data packets. A first downlink data connection signal path is formed by the source radio network controller 3, the base station 2A of the serving radion network subsystem 2 and the user equipment 1 as shown in Fig. 3. A second downlink data connection signal path for bi-casting the data packets can be formed by the source radio network controller 3, the target radio network controller 7, a base station 9A of the target radio network subsystem 9 and the user equipment 1.

In the second downlink data connection signal path the data packets are forwarded via the target RNC 7. The target RNC 7 is aware of the bi-casting process because it monitors a data packet flow through the target RNC. This is illustrated as dashed lines in Fig. 4, i. e. the target RNC 7 knows that a downlink DL speech frame forwarding is performed.

In step S4 the source radio network controller 3 sends a RNSAP relocation commit message to the target radio network controller 7.

In step S5 the target radio network controller 7 sends to the user equipment 1 a RRC UTRAN Mobility Information message to inform the user equipment 1 about the S-RNTI.

In step S6 the target radio network controller 7 receives a UTRAN Mobility Information confirmation message from the user equipment 1. At this phase the relocation is completed from the viewpoint of the user equipment 1 and a two-way speech packet transfer also via the target radio network controller is established.

In a possible embodiment of the method according to the present invention the target radio network controller 7 sends in this moment an interface message to the source radio network controller 3 in step S7a indicating to the source radio network controller 3 that it shall stop the downlink bi-casting of the data packets toward the user equipment 1. The downlink data transfer is then stopped between the source radio network controller 3 and the user equipment 1, but it is continued via the target radio network controller 7 to the user equipment 1. In this phase, speech frames are forwarded via a source RNC-target RNC interface to the target RNC 7 and from there onwards to the user equipment. This interface message is a relocation complete message transmitted in step S7a from the target RNC 7 to the source RNC 3 as shown in Fig. 4. This transmission of a relocation complete message in step S7a has the advantage that the resources necessary for bi-casting data packets via parallel downlink data connection signal paths are no longer occupied and can be used for other purposes. The source radio network controller 3 stops bi-casting of the data packets in response to the received relocation complete message.

In an alternative embodiment of the method according to the present invention the target radio network controller 7 does not send a relocation complete message in step S7a and the downlink bi-casting is stopped by the source radio network controller 3 later when the source radio network controller 3 receives a resource release message in step S9 from the target radio network controller 7 or from core network 5.

In both variants of the method according to the present invention, i. e. with and without the relocation complete message in step S7a, the target radio network controller 7 sends in step S7b as shown in Fig. 4 a relocation complete message to the mobile switching center MSC within the core network 5. This RANAP relocation complete message indicates that a relocation has happened on the user equipment 1.

The MSC within the core network 5 configures the necessary Iu resources for the target radio network controller 7 and sends in step S8 a RANAP relocation complete acknowledge message to the target RNC. In case that an ATM transport option is deployed over the Iu- CS UP the mobile switching center MSC contains transport layer information in the relocation complete acknowledgement message in step S8.

After reception of the relocation complete acknowledgement message in step S8 the target radio network controller 7 initiates the establishment of a AAL2 connection. Finally in step S9 the target radio network controller 7 initiates a release of the resources in the source radio network controller 3 by sending a RNSAP-resource release message. In the second variant if the downlink bi-casting of the data packets was not indicated by the target RNC 7 to the source RNC by a relocation complete message in step S7a the downlink bi-casting is stopped by the source radio network controller 3 after reception of the resource release message in step S9, i. e. at the time when resources at the source RNC 3 and the target RNC 7 interface are released.

In the embodiment shown in Figs. 3, 4 the source radio network controller 3 and the target radio network controller 7 form separate entities from the corresponding base stations, i. e. nodes B. In a possible embodiment the radio network controllers can be integrated into the base station, e. g. in a I-HSPA node B. HSPA (High Speed packet access) is a mobile telephony protocol to improve the performance of UMTS protocols. The method according to the present invention can employ HSPA-protocols such as HSDPA (High Speed Downlink Packet Access), evolved high speed packet access such as HSPA+ and 1-HSPA.

The method according to the present invention has been described with reference to a real time speed service. The method according to the present invention can also be used for providing a handover for other real time services such as video signals providing a continuous video stream when a mobile device or a user equipment leaves a serving radio network subsystem to enter a target radio network subsystem. Accordingly the present invention improves the speech quality of an ongoing telephone call during handover and minimizes any service gap. To avoid interruption of the delivery of speech data packets or speech frames for the user equipment 1 during the enhanced SRNS relocation the source radio network controller 3 forwards the speech data packets in the downlink direction via the target radio network controller 7 to the user equipment 1 until the user equipment has been moved to the target RNS and the enhanced SRNS relocation has been completed from the viewpoint of the user equipment 1. With the method according to the present invention the bi-casting functionality is performed purely in the radio access network and not in the core network of the telecommunication system.

## Claims

1. A method for providing a continuous real time service for a user equipment (1) which moves from a serving radio network subsystem (2) to a target radio network subsystem (9),
wherein during a SRNS-relocation a source radio network controller (3) of said serving radio network subsystem (2) performs bi-casting of data packets via a target radio network controller (7) of said target radio network subsystem (9) to said user equipment (1).

2. The method according to claim 1,
wherein said source radio network controller (3) starts bi-casting of said data packets in response to a relocation request acknowledgement message received from said target radio network controller (7).

3. The method according to claim 1,
wherein said source radio network controller (3) stops bi-casting of the data packets in response to a relocation completed message received from said target radio network controller (7).

4. The method according to claim 3,
wherein said target radio network controller (7) transmits said relocation completed message to said source radio network controller (3) in response to a mobility information confirm message from said user equipment (1).

5. The method according to claim 1,
wherein said source radio network controller (3) stops bi-casting of said data packets in response to a resource release message received from said target radio network controller (7) or from a core network (5).

6. The method according to claim 5,
wherein said target radio network controller (7) transmits said resource release message to said source radio network controller (3) in response to a relocation complete acknowledgement message from a mobile switching center (MSC) of a core network (5) or directly from a core network (5).

7. The method according to claim 1,
wherein said data packets are bi-casted simultaneously via parallel downlink data connections from said source radio network controller (3) to said user equipment (1).

8. The method according to claim 7,
wherein a first downlink data connection signal path for a bi-casting of data packets is formed by said source radio network controller (3), a base station (2A) of said source radio network subsystem (2) and said user equipment (1).

9. The method according to claim 7,
wherein a second downlink data connection signal path for a bi-casting of data packets is formed by said source radio network controller (3), said target radio network controller (7),
a base station (9A) of said target radio network subsystem (9) and said user equipment (1).

10. The method according to claim 1,
wherein said source radio network controller (3) is integrated in a base station of said source radio network subsystem (2).

11. The method according to claim 1,
wherein said target radio network controller (7) is integrated in a base station of said target radio network subsystem (9).

12. The method according to claim 1,
wherein said real time service is formed by a speech service.

13. The method according to claim 1,
wherein said source radio network controller (3) and said target radio network controller (7) communicate with each other via an interface (6) using a radio network subsystem application part (RNSAP) signalling protocol.

14. A radio network controller (3) for providing a continuous real time service,
wherein said radio network controller (3) performs during SRNS-relocation bi-casting of data packets via a target radio network controller (7) of a target radio network subsystem (9) to said user equipment (1), when said user equipment (1) moves from a serving radio network subsystem (2) of said radio network controller (3) to said target radio network subsystem (9).

15. The radio network controller according to claim 14,
wherein said radio network controller (3) is integrated in a base station of said radio network subsystem (2).

16. The radio network controller according to claim 14,
wherein said radio network controller (3) is a serving radio network controller (SRNC).

17. The radio network controller according to claim 14,
wherein said radio network controller (3) starts bi-casting of said data packets in response to a relocation request acknowledgement message received from said target radio network controller (7).

18. The radio network controller according to claim 14,
wherein said radio network controller (3) stops bi-casting of the data packets in response to a relocation completed message received from said target radio network controller (7).

19. The radio network controller according to claim 14,
wherein said radio network controller (3) stops bi-casting of the data packets in response to a resource release message received from said target radio network controller (7) or from a core network (5).

20. A radio access network comprising a radio network controller (3) which provides a continuous real time service,
wherein said radio network controller (3) performs bi-casting of data packets via a target radio network controller (7) of a target radio network subsystem (9) to said user equipment (1), when said user equipment (1) moves from a serving radio network subsystem (2) of said radio network controller (3) to a target radio network subsystem (9).

21. The radio access network according to claim 20,
wherein said radio network controller (3) is connected to a circuit switched core network via a media gateway (MGW).

22. The radio access network according to claim 20,
wherein said radio network controller (3) is connected via a Iu-interface to a MSC server (MSS).

23. The radio access network according to claim 20,
wherein said radio network controller (3) is connected to a packet switched core network via a serving GPRS support node (SGSN).

24. A computer program performing the method according to claims 1 to 13.

25. A data carrier which stores a computer program according to claim 24.
